# EUROPEAN PATENT APPLICATION

(11) **EP 1 236 767 A2**
(43) Date of publication of application: **04.09.2002**
(21) Application number: 02003180.3
(22) Date of filing: 18.02.2002
(51) Int. Cl.: C08L 7/00

(54) **Filled elastomeric compositions**

(30) Priority: 02.03.2001 CA 2339056
(71) Applicant: Bayer Inc., Sarnia, ON N7T 7M2 (CA)
(72) Inventor: Hipkins, William, Sarnia, ON N7S 6G2 (CA)
(74) Representative: Feldhues, Michael L.F., Dr.

(57) **Abstract**

Elastomeric compositions comprising natural rubber, halobutyl elastomer, a mineral filler and a bonding agent display improved properties useful, for example, in vehicle tire treads.

## Description

The present invention relates to elastomeric compositions, to processes for making such compositions and to their use.

### BACKGROUND OF THE INVENTION

Natural rubbers are known to be useful for many purposes, one of which is in vehicle tire treads, especially for truck tires. Many properties are desirable in a rubber for use in a vehicle tire tread and as improvements in one property are achieved this is often at the expense of other properties. For instance, it is desirable that rubber for tire treads shall display good wet traction, good wear characteristics and low rolling resistance. Wet traction correlates with tan δ at 0°. Wear characteristics are measured by the DIN (Deutsche Industrie Norm) abrasion test. Rolling resistance correlates with tan δ or E" at 60°C. The invention provides compositions in which one or more of these properties can be enhanced without significant deleterious effect on the other.

### SUMMARY OF THE INVENTION

According to one aspect, the invention provides an elastomeric composition comprising natural rubber, a halobutyl rubber, a mineral filler, preferably silica, and a rubber-mineral filler bonding agent.

According to another aspect, the invention provides a process for preparing an elastomeric composition which comprises blending natural rubber and halobutyl rubber with a mineral filler, preferably silica, with a rubber-mineral filler bonding agent, preferably a silane.

### DESCRIPTION OF THE PREFERRED EMBODIMENTS

In accordance with the invention, an elastomeric composition is composed of natural rubber and a halobutyl elastomer, and with a mineral filler. Our copending Canadian Patent Application Serial No. 2,293,149 provides halobutyl elastomer filled with a mineral filler and in a preferred embodiment of this invention the halobutyl elastomer is in accordance with Application Serial No. 2,293,149, the disclosure of which is incorporated by reference.

Accordingly, a preferred embodiment of this invention is an elastomeric composition comprising a blend of: (i) natural rubber and (ii) a halobutyl elastomer (iii) a mineral filler, preferably silica, and (iv) a silane that has at least one hydroxyl group or hydrolysable group attached to the silicon atom of the silane, which elastomeric composition is cured with sulphur.

Natural rubber and halobutyl rubber are both oleophilic. Minerals that find use as filler tend to be oleophobic. It is difficult to achieve good mixing of oleophobic particles with oleophilic rubber, and a solution to this difficulty is to incorporate an agent, referred to herein as a bonding agent, in the rubber-filler mixture. The bonding agent can be a silane or mixture of silanes. The silane has at least one hydroxyl group or hydrolysable group attached to the silicon atom of the hydrolysable group attached to the silicon atom of the silane. Particular silanes that can be used include an aminosilane, particularly an aminosilane as described in PCT International Application PCT/CA98/00499, published on 26 November as WO98/53004, or a sulfur-containing silane as described in United States Patent No. 4,704,414, published European Patent Application No. 0 670 347 A1 or published German Patent Application No. 4,435,311 A1, the disclosures of which are incorporated by reference. It is of course possible to use a mixture of carbon black filler and a mineral filler. Mineral fillers are discussed in greater detail below.

The halobutyl elastomer and natural rubber may be in admixture with one or more further elastomers or elastomeric compounds. The halobutyl elastomer should constitute more than 5% of any such mixture. In some cases it is preferred not to use such further elastomers but to use the halobutyl elastomer and natural rubber as the sole elastomers. If further elastomers are to be used, however, then the further elastomer may be, for example, polybutadiene, styrene-butadiene or poly-chloroprene or an elastomer compound containing one or more of these elastomers.

Compositions containing only natural rubber and halobutyl rubber as elastomers, and in which the halobutyl elastomer constitutes from 5 to 50%, particularly 5 to 30% of the elastomeric content areia preferred embodiment of the invention.

The composition comprising the rubber, the halogenated butyl elastomer and the mineral filler can be cured to obtain a cured product that displays improved properties, for instance in abrasion resistance, rolling resistance and traction. Curing may be effected with sulfur. The preferred amount of sulfur is 0.3 to 2.0 parts by weight per hundred parts of rubber. There may also be used an activator, for example zinc oxide. If zinc oxide is present it may be present in an amount up to 5 parts, preferably up to 2 parts, by weight. Other ingredients, for instance stearic acid, or antioxidants, or accelerators may also be added to the elastomer prior to curing. Sulphur curing is then effected in known manner. See, for instance, chapter 2, "The Compounding and Vulcanization of Rubber", of "Rubber Technology", 3^{rd} edition, published by Chapman & Hall, 1995, the disclosure of which is incorporated by reference.

In yet another aspect, the invention provides a sulphur-cured composition comprising natural rubber and a halogenated elastomer, optionally also containing other elastomers or elastomeric compounds, a filler and a bonding agent prepared by the processes described above.

By the expression "halogenated butyl elastomer" is meant a chlorinated or brominated butyl elastomer. Brominated elastomers are preferred and the invention is further described, by way of example, with reference to brominated elastomers. It should be understood, however, that the invention extends to use of a chlorinated butyl elastomer, and references to brominated butyl elastomer should be construed as extending also to chlorinated butyl elastomer unless the context clearly requires otherwise.

Brominated butyl elastomers suitable for use in this invention can be obtained by bromination of butyl rubber which is a copolymer of isobutylene and a comonomer that is usually a C₄ to C₆ conjugated diolefin, preferably isoprene. Comonomers other than conjugated diolefins can be used, however, and mention is made of alkylsubstituted vinyl aromatic comonomers such as C₁-C₄-alkyl substituted styrene. One example that is commercially available is brominated isobutylene methylstyrene copolymer (BIMS) in which the comonomer is p-methylstyrene.

A brominated butyl elastomer typically contains in the range of from 1 to 3 weight percent of isoprene and in the range of from 97 to 99 weight percent of isobutylene based on the hydrocarbon content of the polymer, and in the range of from 1 to 4 weight percent bromine based on the bromobutyl polymer. A typical bromobutyl polymer has a molecular weight, expressed as the Mooney viscosity (ML 1 + 8 at 125°C), of in the range of from 28 to 55.

For use in the present invention the brominated butyl elastomer preferably contains in the range of from 1 to 2 weight percent of isoprene and in the range of from 98 to 99 weight percent of isobutylene based on the hydrocarbon content of the polymer and in the range of from 0.5 to 2.5 weight percent, preferably in the range of from 0.75 to 2.3 weight percent, of bromine based on the brominated butyl polymer.

A stabilizer may be added to the brominated butyl elastomer. Suitable stabilizers include calcium stearate and epoxidized soyabean oil, preferably used in an amount of in the range of from 0.5 to 5 parts by weight per 100 parts by weight of the brominated butyl rubber.

Examples of suitable brominated butyl elastomers include Bayer® Bromobutyl BB2040, commercially available from Bayer. Bayer® Bromobutyl BB2040 has a Mooney viscosity (RPML 1+8 @ 125°C) of 39 ± 4, a bromine content of 2.0 ± 0.3 wt% and an approximate molecular weight of 500,000 grams per mole. Examples of suitable chlorinated butyl elastomers include Bayer® Chlorobutyl CB1240, also commercially available from Bayer. Bayer® Chlorobutyl CB 1240 has a Mooney viscosity (RPML 1+8 @ 125°C) of 38 + 4 and a chlorine content of 1.25 ± 0.1 wt%.

The filler used in the blend is composed of particles of a mineral, and examples include silica, silicates, clay such as bentonite, gypsum, alumina, titanium dioxide, talc, mixtures of these, and the like. These mineral particles have hydroxyl groups on their surface, rendering them hydrophilic and oleophobic. This exacerbates the difficulty of achieving good interaction between the filler particles and the elastomer. For many purposes, the preferred mineral is silica, especially silica made by carbon dioxide precipitation of sodium silicate.

Dried amorphous silica particles suitable for use in the elastomeric composition may have a mean agglomerate particle size in the range of from 1 to 100 microns, preferably between 10 and 50 microns and most preferably between 10 and 25 microns. It is preferred that less than 10 percent by volume of the agglomerate particles are below 5 microns or over 50 microns in size. A suitable amorphous dried silica moreover has a BET surface area, measured in accordance with DIN (Deutsche Industrie Norm) 66131, of in the range of from 50 to 450 square meters per gram and a DBP absorption, as measured in accordance with DIN 53601, of in the range of from 150 and 400 grams per 100 grams of silica, and a drying loss, as measured according to DIN ISO 787/11, of in the range of from 0 to 10 percent by weight. Suitable silica fillers are available under the trademarks HiSil® 210, HiSil® 233 and HiSil® 243 from PPG Industries Inc. Also suitable are Vulkasil® S and Vulkasil® N, from Bayer AG.

The silane used in the process has a hydroxyl group or a hydrolysable group that is attached to the silicon atom of the silane. The hydrolysable group can be regarded as a hydroxyl group that is produced in situ from a silane that has a silicon atom that bears a group that will undergo hydrolysis to yield a hydroxyl group on the silicon atom. As examples of such hydrolysable groups there are mentioned particularly alkoxy groups having up to six carbon atoms, especially ethoxy and methoxy groups. These and other hydrolysable groups are discussed further below.

The silane is preferably an aminosilane or a sulfur-containing silane. As aminosilanes there are mentioned especially aminosilanes of formula I defined in our PCT international application PCT/CA98/00499, published on 26 November 1998 as WO98/53004-A1, the disclosure of which is incorporated herein by reference, and acid addition salts and quaternary ammonium salts of such aminosilanes.

Formula I of PCT/CA98/00499 is as follows: 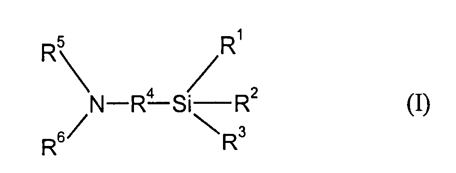 in which:
at least one of R¹, R² and R³, preferably two of R¹, R² and R³ and most preferably three of R¹, R² and R³ are hydroxyl or hydrolysable groups;
- R⁴: is a divalent group that is resistant to hydrolysis at the Si-R⁴ bond;
- R⁵: is selected from the group consisting of hydrogen; a C₁₋₄₀ alkyl group; a C₂₋₄₀ mono-, di- or tri-unsaturated alkenyl group; a C₆-C₄₀ aryl group; a group of the formula: 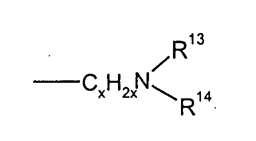
in which x is an integer from 2 to 10, R¹³ and R¹⁴, which may be the same or different, are each hydrogen; C₁₋₁₈ alkyl; C₂₋₁₈ mono-, di- or tri-unsaturated alkenyl; phenyl; a group of the formula: 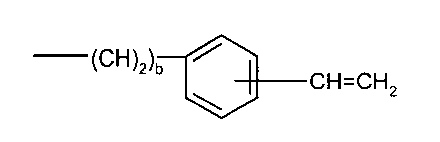 wherein b is an integer from 1 to 10; a group of formula: 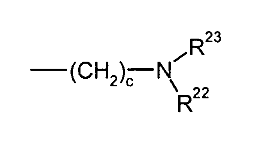 wherein c is an integer in the range of from 1 to 10 and R²² and R²³ which may be the same or different, are each hydrogen, a C₁₋₁₀ alkyl group or C₂₋₁₀ alkenyl group, provided that there is no double bond in the position alpha to the nitrogen atom; a group of the formula:

-[(CH₂)ᵣ NH]_{d}-H

wherein r is an integer from 1 to 6 and d is an integer in the range of from 1 to 4;
- R⁶: may be any of the groups defined for R⁵, or R⁵ and R⁶ may together form a divalent group of formula: 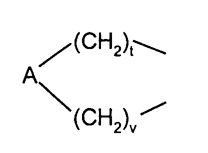
in which A is selected from the group consisting of an oxygen atom and a sulfur atom, -CHR groups and or -NR groups in which R is hydrogen or a C₁₋₄₀ alkyl or C₂₋₄₀ alkenyl group, a C₆-C₄₀ aryl group, and t and v are each independently 1, 2, 3 or 4; provided that the sum of t and v does not exceed 6, and is preferably 4.

In the aminosilane of formula I, it is preferred that all three of the groups R¹, R² and R³ are readily hydrolysable. Suitable groups R¹ include hydroxyl groups and hydrolysable groups of formula OCₚH₂ₚ+1, where p has a value in the range of from 1 to 10. The alkyl chain can be interrupted by oxygen atoms, to give groups, for example, of formula CH₃OCH₂O-, CH₃OCH₂OCH₂O-, CH₃(OCH₂)₄O-, CH₃OCH₂CH₂O-, C₂H₅OCH₂O-, C₂H₅OCH₂OCH₂O-, or C₂H₅OCH₂CH₂O-. Other suitable hydrolysable groups include phenoxy, acetoxy, chloro, bromo, iodo, ONa, OLi, OK or amino or mono- or dialkylamino, wherein the alkyl group(s) have in the range of from 1 to 30 carbon atoms.

R² and R³ can take the same values as R¹, provided that only one of R¹, R² and R³ is chloro, bromo or iodo. Preferably, only one or two of R¹, R² and R³ is hydroxyl or ONa, OLi or OK.

Non-limiting examples of groups R² and R³ that are not hydrolysable include C₁₋₁₀ alkyl, C₂₋₁₀ mono- or diunsaturated alkenyl, and phenyl. R² and R³ can also be a group -R⁴NR⁵R⁶, discussed further below. It is preferred that R¹, R² and R³ are all the same and are CH₃O-, C₂H₅O- or C₃H₈O-. Most preferably they are all CH₃O-or C₂H₅O-.

The divalent group R⁴ is preferably such that N-R⁴-Si is one of the formula:

N-(CH₂)ₚ(O)ₒ(C₆H₄)ₙ(CH₂)ₘ(CH=CH)ₖ-Si

in which k, m, n, o and p are all whole numbers. The order of the moieties between N and Si is not particularly restricted, other than that neither N or O should be directly bound to Si. The value of k is 0 or 1, the value of m is from 0 to 20 inclusive, the value of n is 0, 1 or 2, the value of o is 0 or 1 and the value of p is in the range of from 0 to 20, with the provisos that the sum of the values of k, m, n, o and p is at least 1 and not more than 20 and that if o is 1, p is 1 or greater and the sum of k, m and n is 1 or greater, i.e. that the Si atom is linked directly to a carbon atom. There should be no hydrolysable bond between the silicon and nitrogen atoms. Preferably, m is 3 and 1, n, o and p are all 0, i.e., R⁴ is -CH₂CH₂CH₂-.

The group R⁵ is preferably a C₈₋₂₀ mono-unsaturated alkenyl group, most preferably a C₁₆₋₁₈ monounsaturated alkenyl group. R⁶ is preferably hydrogen.

Suitable aminosilanes of Formula I include, but are not limited to:
3-aminopropylmethyldiethoxysilane,
N-2-(vinylbenzylamino)-ethyl-3-aminopropyl-trimethoxysilane,
N-(2-aminoethyl)-3-aminopropyltrimethoxysilane, trimethoxysilylpropyldiethylenetriamine,
N-2-(aminoethyl)-3 aminopropyltris(2-ethylhexoxy)-silane,
3-aminopropyldiisopropylethoxysilane,
N-(6-aminohexy)aminopropyltrimethoxysilane,
4-aminobutyltriethoxysilane,
4-aminobutyldimethylmethoxysilane, triethoxy- silylpropyl-diethylenetriamine,
3-aminopropyltris(methoxyethoxyethoxy)silane,
N-(2-aminoethyl)-3-aminopropyltrimethoxysilane,
N-2-(aminoethyl)-3-aminopropyltris(2-ethylhexoxy)-silane,
3-aminopropyldiisopropylethoxysilane,
N-(6-aminohexyl)aminopropyltrimethoxysilane,
4-aminobutyltriethoxysilane, and (cyclohexylaminomethyl)-methyldiethoxysilane.

Preferred compounds of formula I include those in which R⁵ is hydrogen and R⁶ is the alkenyl group from the following: soya alkyl, tall oil alkyl, stearyl, tallow alkyl, dihydrogenated tallow alkyl, cocoalkyl, rosin alkyl, and palmityl, it being understood that in this case the alkyl may include unsaturation.

It is preferred that at least one of R⁴, R¹³ and R¹⁴ has a chain of at least 8 carbon atoms, more preferably at least 10 carbon atoms, even more preferably at least 12 carbon atoms, most preferably at least 14 carbon atoms uninterrupted by any heteroatom.

The aminosilane of formula I can be used as the free base, or in the form of its acid addition or quaternary ammonium salt, i.e. 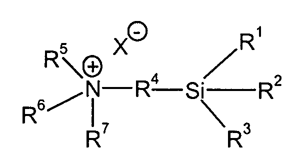 wherein R¹, R², R³, R⁴, R⁵ and R⁶ are as defined above; R⁷ is selected from the group consisting of hydrogen, C₁₋₄₀ alkyl groups and C₂₋₄₀ mono-, di- or triunsaturated alkenyl groups, and X is an anion. X is suitably chlorine, bromine, or sulphate, of which chlorine and bromine are preferred, and R⁷ is preferably hydrogen. Non-limiting examples of suitable salts of aminosilanes of formula I include
N-oleyl-N-[(3-triethoxysilyl)propyl]ammonium chloride,
N-3-aminopropylmethyldiethoxy-silane hydrobromide,
(aminoethylaminomethyl)phenyltrimethoxysilane hydrochloride,
N-[(3-trimethoxysilyl)propyl]-N-methyl,
N-N-diallylammonium chloride,
N-tetradecyl-N,N-dimethyl-N-[(3-trimethoxysilyl) propyl]ammonium bromide,
3[2-N-benzylaminoethyl-aminopropyl]trimethoxysilane hydrochloride,
N-octadecyl-N,N-dimethyl-N-[(3-tri-methoxysilyl) propyl]ammonium bromide,
N-[(trimethoxysilyl)propyl]-N-tri(n-butyl)ammonium chloride,
N-octadecyl-N-[3-triethoxysilyl)propyl]ammonium chloride,
N-2-(vinylbenzylamino)ethyl-3-aminopropyl-trimethoxysilane hydrochloride,
N-2-(vinylbenzylamino)ethyl-3-aminopropyl-trimethoxysilane hydrochloride and
N-oleyl-N-[(3-trimethoxysilyl)propyl]ammonium chloride.

The silane compound may be a sulfur-containing silane compound. Suitable sulfur-containing silanes include those described in United States patent 4,704,414, in published European patent application 0,670,347 A1 and in published German patent application 4435311 A1, the disclosures of each of which is incorporated herein by reference. One suitable compound is a mixture of bis[3-(triethoxysilyl)propyl]-monosulfane, bis[3-(triethoxysilyl)propyl] disulfane, bis[3-(triethoxysilyl)propyl]-trisulfane and bis[3-(triethoxysilyl)propyl]tetrasulfane and higher sulfane homologues available under the trademarks Si-69® (average sulfane 3.5), Silquest™ A-1589 (from CK Witco)or Si-75® (from Degussa) (average sulfane 2.0). Another example is bis[2-(triethoxysilyl)ethyl]-tetrasulfane, available under the trade-mark Silquest® RC-2.

Examples of suitable sulfur-containing silanes include compounds of formula

R⁸R⁹R¹⁰SiR¹¹

in which at least one of R⁸, R⁹ and R¹⁰, preferably two of R⁸, R⁹ and R¹⁰ and most preferably three of R⁸, R⁹ and R¹⁰, are hydroxyl or hydrolysable groups. The groups R⁸, R⁹ and R¹⁰ are bound to the silicon atom. The group R⁸ may be hydroxyl or OCₚH₂ₚ+1 where p is in the range of from 1 to 10 and the carbon chain may be interrupted by oxygen atoms, to give groups, for example of formula CH₃OCH₂O-, CH₃OCH₂OCH₂O-, CH₃(OCH₂)₄O-, CH₃OCH₂CH₂O-, C₂H₅OCH₂O-, C₂H₅OCH₂OCH₂O-, or C₂H₅OCH₂CH₂O-. Alternatively, R⁸ may be phenoxy. The group R⁹ may be the same as R⁸. R⁹ may also be a C₁₋₁₀ alkyl group, or a C₂₋₁₀ mono- or diunsaturated alkenyl group. Further, R⁹ may be the same as the group R¹¹ described below.

R¹⁰ may be the same as R⁸, but it is preferred that R⁸, R⁹ and R¹⁰ are not all hydroxyl. R¹⁰ may also be C₁₋₁₀ alkyl, phenyl, C₂₋₁₀ mono- or diunsaturated alkenyl. Further, R¹⁰ may be the same as the group R¹¹ described below.

The group R¹¹ attached to the silicon atom is such that it may participate in a crosslinking reaction with unsaturated polymers by contributing to the formation of crosslinks or by otherwise participating in crosslinking. R¹¹ may have the following structure:

-(alk)ₑ(Ar)_{f}Sᵢ(alk)_{g}(Ar)ₕSiR⁸R⁹R¹⁰

where R⁸, R⁹ and R¹⁰ are the same as previously defined, alk is a divalent straight hydrocarbon group having in the range of from 1 to 6 carbon atoms or a branched hydrocarbon group having in the range of from 2 to 6 carbon atoms, Ar is either a phenylene -C₆H₄-, biphenylene -C₆H₄-C₆H₄- or -C₆H₄-OC₆H₄-group and e, f, g and h are either 0, 1 or 2 and i is an integer in the range of from 2 to 8 inclusive with the provisos that the sum of e and f is always 1 or greater than 1 and that the sum of g and h is also always 1 or greater than 1. Alternately, R¹¹ may be represented by the structures (alk)ₑ(Ar)_{f}SH or (alk)ₑ(Ar)_{f}SCN where e and fare as defined previously.

Preferably, R⁸, R⁹ and R¹⁰ are all either OCH₃, OC₂H₅ or OC₃H₈ groups and most preferably all are OCH₃ or OC₂H₅ groups. It is most preferred that the sulfur-containing silane is bis[3-(trimethoxysilyl)propyl]-tetrasulfane (Si-168).

Non-limiting illustrative examples of other sulfur-containing silanes include the following:
bis[3-(triethoxysilyl)propyl]disulfane,
bis[2-(trimethoxysilyl)ethyl]tetrasulfane,
bis[2-(triethoxysilyl)ethyl]trisulfane,
bis[3-(trimethoxysilyl)propyl]disulfane,
3 -mercaptopropyltrimethoxysilane,
3-mercaptopropylmethyldiethoxysilane, and
3-mercaptoethylpropylethoxymethoxysilane.

Other preferred sulfur-containing silanes include those disclosed in published German patent application 44 35 311 A1, the disclosure of which is incorporated by reference. On pages 2 and 3, there is disclosure of oligomers and polymers of sulphur containing organooxysilanes of the general formula: 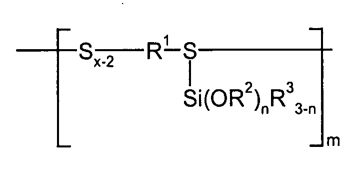 in which R¹ is a saturated or unsaturated, branched or unbranched, substituted or usubstituted hydrocarbon group that is at least trivalent and has from 2 to 20 carbon aoms, provided that there are at least two carbon-sulphur bonds, R² and R³, independently of each other, are saturated or unsaturated, branched or unbranched, substituted or unsubstituted hydrocarbon groups with in the range of from 1 to 20 carbon atoms, halogen, hydroxy or hydrogen, n is in the range of from 1 to 3, m is in the range of from 1 to 1000, p is in the range of from 1 to 5, q is in the range of from 1 to 3 and x is in the range of from 1 to 8.

Other sulfur-containing silanes are of the general formula 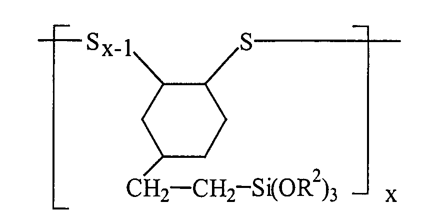 wherein R², m and x have the meanings given above, and R² is preferably methyl or ethyl. These compounds disclosed are in German Patent Application No. 44 35 311 A1.

Particularly preferred sulfur-containing silanes are those of the following general formulae: 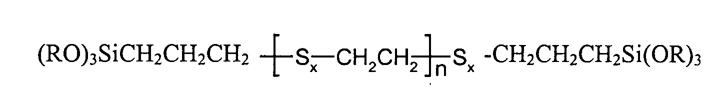 in which R = -CH₃ or ―C₂H₅, x=1-6 and n=1-10; 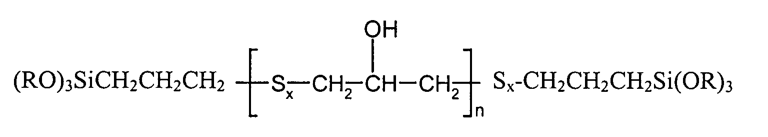 in which R = -CH₃ or -C₂H₅, x = 1-6 and n = 1-10; 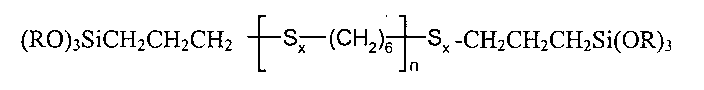 in which R = -CH₃, -C₂H₅ or -C₃H₇, n = 1-10 and x = 1-6; 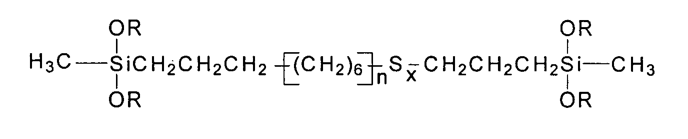 in which R = -CH₃, -C₂H₅ or -C₃H₇, n = 1-10 and x = 1-6; 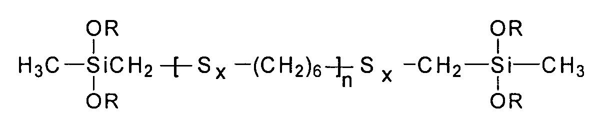 in which R = -CH₃, -C₂H₅, -C₃H₇, n = 1-10 and x = 1-6; 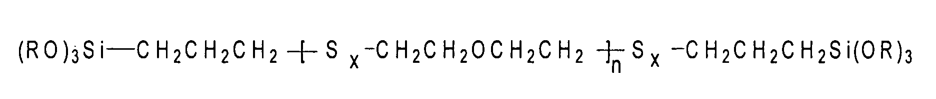 in which R = -CH₃, -C₂H₅, -C₃H₇, n = 1-10 and x = 1-6; 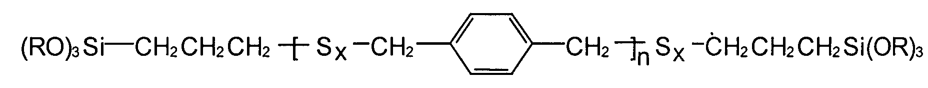 in which R = -CH₃, -C₂H₅ or -C₃H₇, n = 1-10 and x = 1-6; 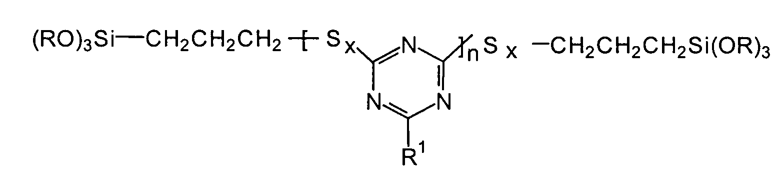 in which R = -CH₃, -C₂H₅ or -C₃H₇; R¹ = -CH₃, -C₂H₅, -C₃H₇, -C₅H₅, -OCH₃, - OC₂H₅, -OC₃H₇ or -OC₅H₅, n = 1-10 and x = 1-8; and 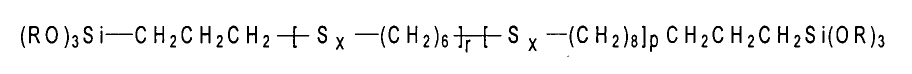 in which R = -CH₃, -C₂H₅ or -C₃H₇, r+p = 2-10 and x = 1-6.

Also mentioned are sulfur-containing silanes of the formulae: 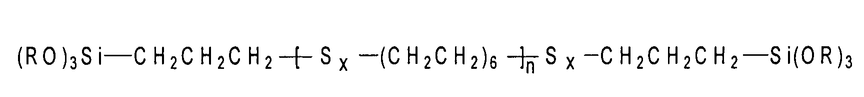 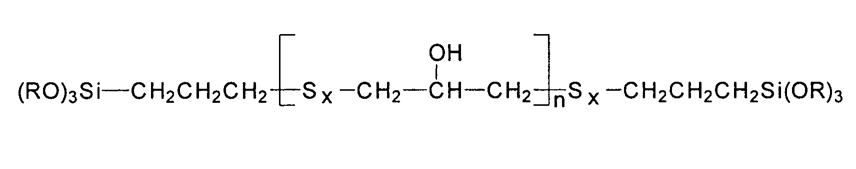 in which x is 1-6 and n is 1-4.

If the silane is a sulfur-containing silane a preferred silane is bis[3-(triethoxysilyl)-propyl]- tetrasulfane, of formula

(C₂H₅O)₃Si-CH₂-CH₂-CH₂-S-S-S-S-CH₂-CH₂-CH₂-Si(OC₂H₅)₃.

This compound is commercially available under the trade-mark Si-69®. In fact Si-69® is a mixture of the above compound, i.e., the tetrasulfane, with bis[3-(triethoxysilyl)-propyl]monosulfane and bis[3-(triethoxysilyl)- propyl]trisulfane, average sulfane 3.5.

Another preferred sulfur-containing silane is available under the trade-mark Silquest® 1589. The material available under this trade-mark is a mixture of sulfanes but the predominant component, about 75%, is similar in structure to the tetrasulfane Si-69®, except that it is a disulfane, i.e., it has only

-S-S-

where Si-69® has

-S-S-S-S-.

The remainder of the mixture is composed of ―S₁ to -S₇- compounds. Silquest® A-1589 is available from CK Witco. A similar material is available from Degussa under the trade-mark Si-75®.

Yet another preferred sulfur-containing silane is bis[2-(triethoxysilyl)ethyl]tetrasulfane, available under the trade-mark Silquest® RC-2.

The trimethoxy compounds corresponding to these triethoxy compounds can also be used.

The amount of filler to be incorporated into the elastomeric composition can be varied between wide limits. Typical amounts of filler are in the range of from 20 parts to 120 parts by weight, preferably 30 parts to 100 parts, more preferably 40 to 80 parts per hundred parts of elastomer. The amount of the silane compound or compounds used may be typically in the range of from 2 to 12 parts, preferably 6 to 10 parts, per hundred parts of filler. There may also be present usually up to 40 parts of processing oil, preferably 5 to 20 parts, per hundred parts of elastomer, and a lubricant, for example a fatty acid such as stearic acid usually up to 3 parts by weight, preferably up to 2 parts by weight.

Carbon black is not normally used as a filler in the elastomer compositions of the invention, but in some embodiments it may be present usually in an amount up to 40 phr. If the mineral filler is silica and it is used with carbon black, the silica should constitute at least 55% by weight of the total of silica and carbon black. If the halobutyl elastomer/natural rubber composition of the invention is blended with a further elastomeric composition, that further elastomeric composition may contain carbon black as a filler, or may contain mineral filler, or it may be unfilled until it is blended with the other components of the composition.

The butyl elastomer, natural rubber filler and silane are mixed together, suitably at an elevated temperature that may range of from 30°C to 200°C. It is preferred that the temperature is greater than 60°C, and a temperature in the range of from 90 to 160°C is particularly preferred. Normally the mixing time does not exceed one hour and a time in the range of from 2 to 30 minutes is usually adequate. The mixing is suitably carried out in an internal mixer such as a Banbury mixer, or a Haake or Brabender miniature internal mixer. A two roll mill mixer also provides a good dispersion of the filler within the elastomeric composition. An extruder also provides good mixing, and permits shorter mixing times. It is possible to carry out the mixing in two or more stages, and the mixing can be done in different apparatus, for example one stage in an internal mixer and one stage in an extruder. Total mixing time to achieve blends may vary depending on the particular silane selected or bonding agent, the relative amounts of elastomers in a given blend, and the degree of incorporation of silica desired.

It is possible to pre-treat the mineral filler with the bonding agent. Thus, for example, halobutyl elastomer, natural rubber, mineral filler and bonding agent may be added separately and then all be blended together. Alternatively the silica may be treated with the bonding agent prior to being blended with the halobutyl elastomer and natural rubber.

In a preferred embodiment of the invention halobutyl elastomer, silica particles, silane and, optionally, processing oil extender are placed in a mixer such as a Banbury mixer, and mixed. It is preferred that the temperature of the mixing is not too high and preferably does not exceed 160°C. Higher temperatures may cause curing to proceed undesirably far and impede subsequent processing. The product of mixing these four ingredients at a temperature not exceeding 160°C can be readily further processed on a warm mill with the addition of the natural rubber and the addition of further curatives such as sulfur as vulcanizing agent, zinc oxide as activator and magnesium oxide to raise basicity. Alternatively, the two elastomers, i.e., the natural rubber and the halogenated butyl elastomer may be admixed in one masterbatch with the other ingredients in the Banbury mixer before further processing.

Curing can be effected with sulfur as vulcanizing agent. Other curing agents can be used, however. As examples of other curing agents there are mentioned bis-dienophiles such as bis-maleimide, commercially available from DuPont under the trademark HVA 2®. Other commercially available ingredients that can be present in the masterbatch include processing aids such as aromatic oils (Sundex® 790) and waxes (Sunolite 240), antioxidants (Vulkanox® 4020/LG or 4020 liquid (6PPD) and Vulkanox® HS/LG (TMQ)), scorch inhibitors (Santogard® PVI WGR-80%) and accelerators (Vulkacit® CZ/EGC(CBS).

The elastomer compositions of the invention find many uses, but mention is made particularly of use in tire tread compositions for vehicles, especially trucks and buses engine movements, shoes, rubber diaphragms such as for water pumps.

Important features of a tire tread composition are that it shall have low rolling resistance, good traction, particularly in the wet, and good abrasion resistance so that it is resistant to wear. Compositions of the invention display these desirable properties. Thus, an indicator of traction is tan δ at 0°C, with a high tan δ at 0°C correlating with good traction. An indicator of rolling resistance is tan δ at 60°C, with a low tan δ at 60°C correlating with low rolling resistance. Rolling resistance is a measure of the resistance to forward movement of the tire, and low rolling resistance is desired to reduce fuel consumption. Low values of loss modulus E" at 60°C are also indicators of low rolling resistance. As is demonstrated in the examples below, compositions of the invention display high tan δ at 0°C, low tan δ at 60°C and low loss modulus at 60°C.

The elastomeric compositions of this invention can be further mixed with other rubbers, for example, butadiene rubber, styrene-butadiene rubber and isoprene rubbers, and compounds contain these elastomers.

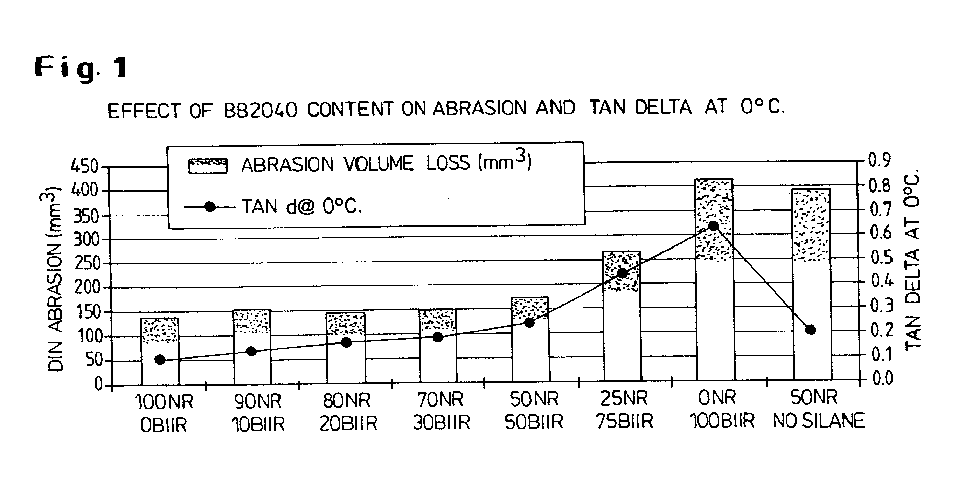

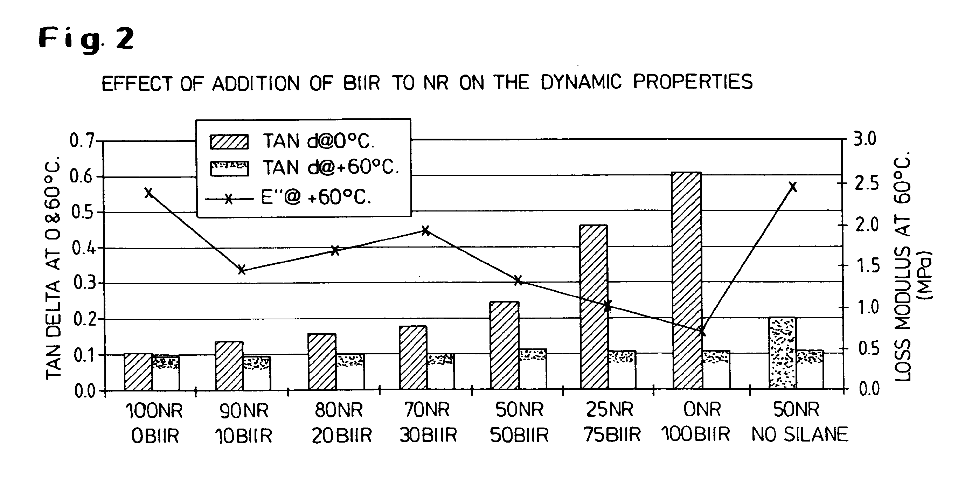

The invention is further illustrated in the following examples and the accompanying Figures 1 and 2.

### EXAMPLES

### Description of tests:

Abrasion resistance: DIN 53-516 (60 grit Emery paper)

### DYNAMIC PROPERTY TESTING

Dynamic testing (Tan δ at 0°C and 60°C, Loss modulus at 60°C) were carried out using the Rheometrics RSA II. The RSA II is a dynamic mechanical analyzer for characterizing the properties of vulcanized elastomeric materials.

The dynamic mechanical properties give a measure of traction with the best traction usually obtained with high values of Tan δ at 0°C. Low values of Tan δ at 60°C., and in particular, low loss modulus at 60°C. are indicators of low rolling resistance.

### Cure rheometry: ASTM D 52-89 MDR2000E Rheometer at 3° arc and 1.7 Hz

Permeability: ASTM D 14-34

The invention is further illustrated in the following examples and accompanying drawings.

### Description of Ingredients and General Mixing Procedure:

HiSil® 233 - silica - a product of PPG

The halobutyl elastomer, natural rubber, silica and silane compounds were mixed in a model B Banbury mixer with a nominal volume of 1570 milliliters and using a fill factor of nominally 67% to 73% by volume. The starting temperature was 40°C.

At 0 minutes, the rubber was added to the Banbury followed by the oil + 1/2 of the silica + 1/2 of the silane. The ram was lowered and the Banbury turned on at 77rpm.

At 1 minute, a 1/4 of the silica was added.
At 2 minutes, the remainder of the silane and the remainder of the silane were added.
After 4 minutes the Banbury chute was swept.

The products were mixed for a total of 6 minutes at 120 - 145°C.
The compound was removed from the Banbury, and sheeted out on a warm mill set at 40°C.

Curatives were then added to all or a portion of the compound on a mill set at 30°C.

### Example 1

Single masterbatches containing both brominated butyl rubber (Bayer ® BB 2040), natural rubber, silica, 3-aminopropyl- triethoxysilane and bis[3-(triethoxysilyl)-propyl]tetrasulfane (Si 69®) where prepared. The elastomers were used in the ratios 100/0, 90/10, 80/20, 70/30, 50/50, 25/75 and 0/100. The ratio of the two silanes was also varied, and one 50/50 blend of elastomers was prepared with no silane.

The components were mixed in a white "B" Banbury, utilizing a 6 minute mix. Dump temperatures varied between 120°C and 140°C for the components containing silanes. The compound containing no silane reached a dump temperature of 150°C.

The mixing conditions were;
0' add BIIR + ½ HiSil® 233 + ½ bonding agent
1' add ¼ HiSil® 233
2' add ¼ HiSil® 233 + ½ bonding agent
3-4' sweep
6' dump

The curatives, which were added on a cool mill, were

| | |
|---|---|
| Santogard® PVI WGR-80% | 0.5 |
| NBS Sulfur | 1.8-1 |
| Vulkazit® CZ/EGC (CBS) | 1.8-1 |
| ZnO | 4-1 |

The complete formulations are given in Table 2.

### Example 2

Single masterbatches containing either natural rubber (NR) or 80 % NR + 20% BB2040, silica (HiSil 233), and either TESPD or a combination of TESPD + APTES were prepared. One masterbatch containing NR, and carbon black (N-110) was prepared.

The actual recipes are given in Table 2.

**TABLE 2**

| | A | B | C |
|---|---|---|---|
| NR (SMR CV60) | 100 | 100 | 100 |
| C-Black N-110 | 50 | | |
| HiSil 233 | | 60 | 60 |
| Silane S-1589 (TESPD) | | 6.9 | 8.6 |
| Silane APTES | | 1.6 | |
| Stearic acid | 2 | 2 | 2 |
| Sundex 790 (Ar. Oil) | 4 | 4 | 4 |
| Sunolite 240 (Wax) | 1.5 | 1.5 | 1.5 |
| Vulkanox 4020/LG (6PPD) | 2 | 2 | 2 |
| Vulkanox HS Past. (TMQ) | 2 | 2 | 2 |
| ZnO | 4 | 4* | 4* |
| Dump temp.(°C) @10 min. | ND | 140-5 | 130 |

| | | | |
|---|---|---|---|
| * ZnO in the silica mixes was added with the other curatives on a cool mill (see below). | | | |

The mixing conditions for A were:
- 0': add NR + carbon black
- 1': add StH + Sundex 790 + Sunolite 240 + 6PPD + TMQ + ZnO
- 2-3': sweep
- 6': dump or @ 150°C

The mixing conditions for B-C were:
- 0': add NR + ½ Hisil 233 + ½ silanes + StH + Sundex 790 + Sunolite 240 + 6PPD + TMQ
- 1': add ¼ HiSil 233
- 2': add ¼ HiSil 233 + ½ silanes
- 3-4': sweep
- 10': dump

C was remixed the next day for a further 6 minutes in the Banbury.

Three different curative systems, which were added on a cool mill, were examined. A is a typical truck tread curative system, B is a high sulfur cure system and C is a Vulcuren® based system. The curative systems are given in Table 3:

**TABLE 3**

| Cure system | A | B | C |
|---|---|---|---|
| Santogard PVI WGR-80% | 0.5 | 0.5 | 0.5 |
| ZnO | 4 | 4 | 4 |
| Vulkazit CZ/EGC (CBS) | 1.75 | 0.5 | 1.5 |
| NBS Sulfur | 1.75 | 3.0 | 0.5 |
| Vulcuren® KA 9188* | | | 2.5 |

| | | | |
|---|---|---|---|
| * available from Bayer AG | | | |

The effect of adding 20% BB2040 to NR is shown in Table 4.

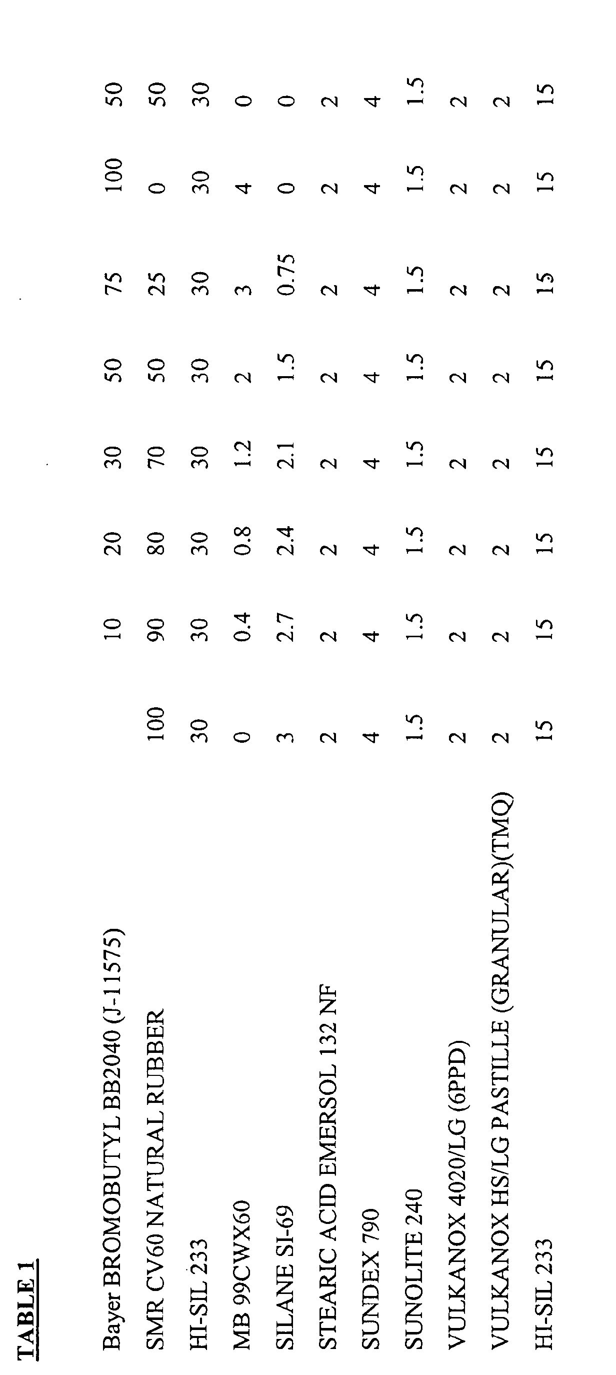

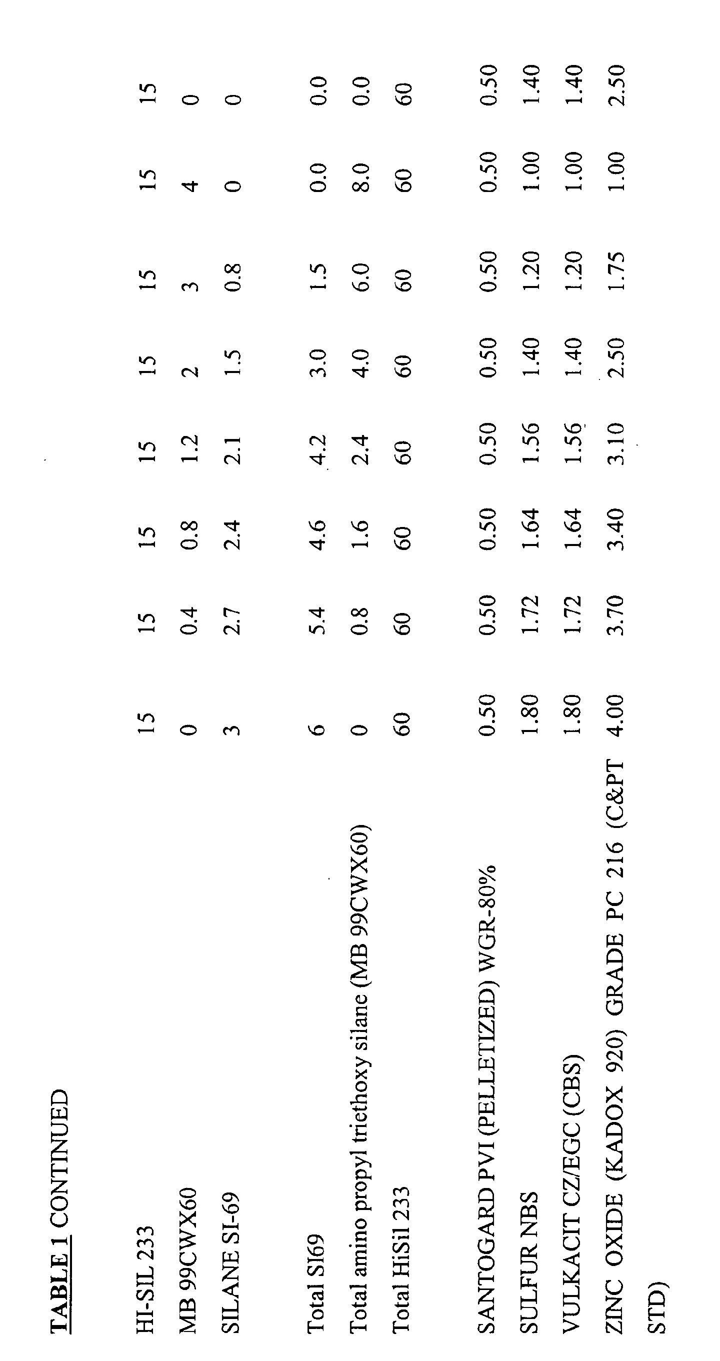

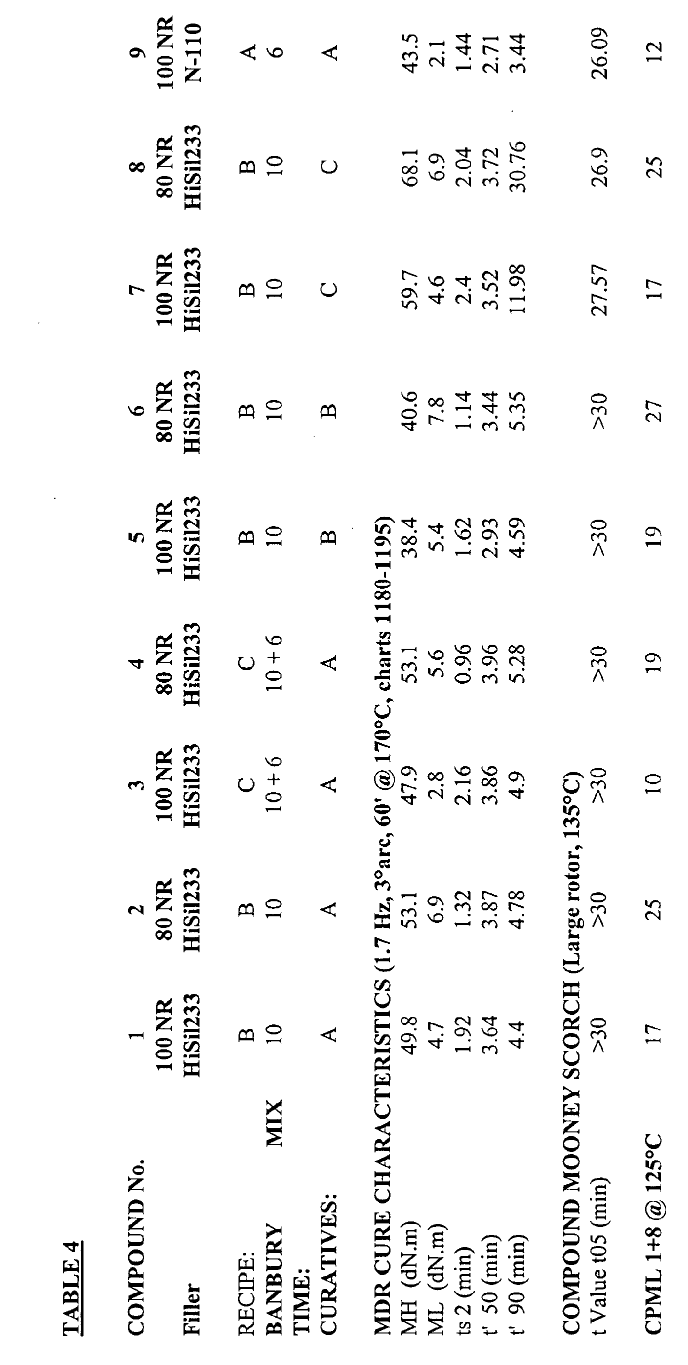

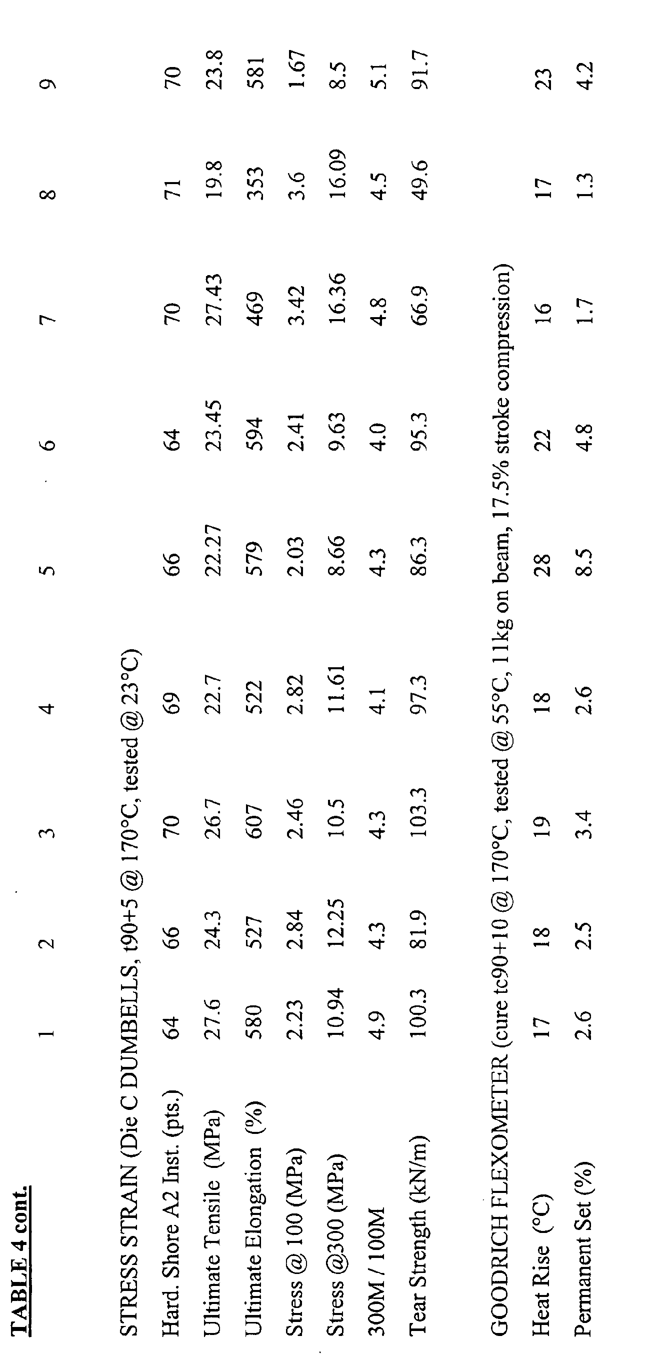

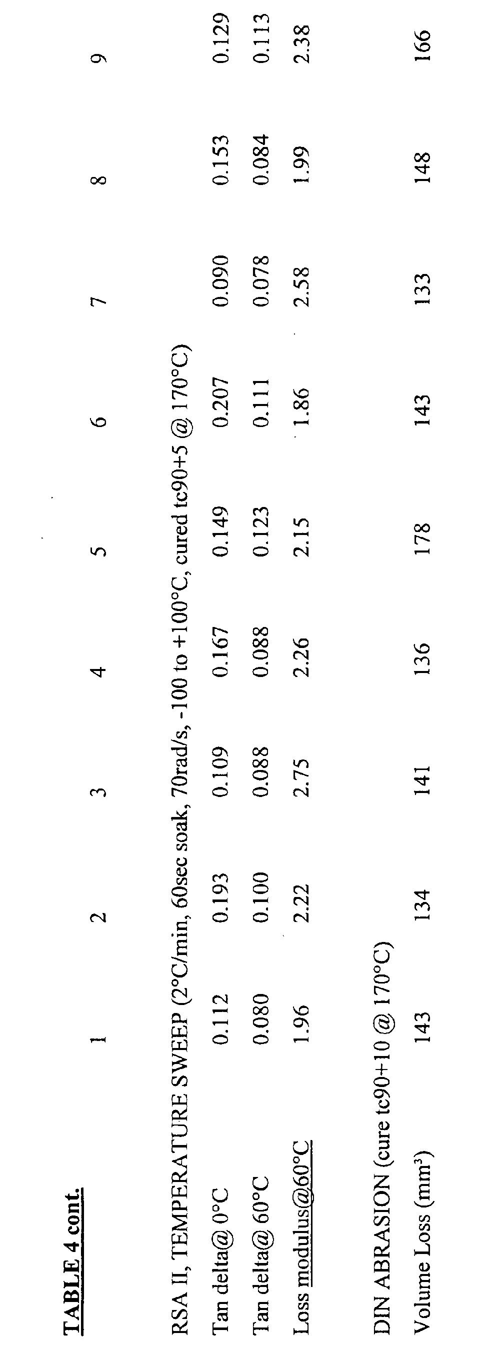

The effect of addition of BB2040 to natural rubber on abrasion and tan δ at 0°C is shown in Figure 1. As can be seen, addition of the halobutyl elastomer to natural rubber in amounts up to 30% has no effect on abrasion resistance, but tan δ at 0°C is increased from 0.11 to 0.19, indicating a significant improvement in wet traction without any adverse effect on abrasion resistance.

The effect of addition of BB2040 to natural rubber on the dynamic properties is shown in Figure 2. This shows tan δ at 0°C increasing with the halobutyl elastomer content, again indicating an increase in wet traction. Tan δ at 60°C remains constant but the loss modulus E" ranges between 1.47 and 1.96 with amounts of halobutyl elastomer from 10 to 30%. These values compare favorably with a value of E" of 2.36 for 100% natural rubber.

The effect of adding 20% BB2040 to NR is shown in Table 4. Comparison of 1 with 2, 3 with 4, 5 with 6, 7 with 8 shows in all cases a significant increase in tan delta at 0°C indicating an improvement in wet traction. Concurrently there is an improvement in DIN abrasion resistance for 3 of the 4 pairs of data, and all the compounds containing silica show an improvement in DIN compared to the NR carbon black filled compound (number 9). Tan delta and loss modulus at 60°C are similar.

## Claims

1. An elastomeric composition comprising natural rubber, a halobutyl elastomer, a mineral filler, and a rubber-mineral filler bonding agent.

2. A composition according to claim 1 wherein the halobutyl elastomer is a bromobutyl elastomer and the filler is silica.

3. A composition according to claim 1 or 2 wherein the bonding agent is a silane.

4. A composition according to claim 1, 2 or 3 wherein the composition is cured with sulphur.

5. A composition according to any one of claims 1 to 4 wherein the halobutyl elastomer constitutes from 5 to 50% of the elastomeric content of the composition.

6. A composition according to claim 5 wherein the halobutyl elastomer constitutes from 5 to 30% of the elastomeric content of the composition.

7. A process for preparing an elastomeric composition which comprises blending a natural rubber, a halobutyl elastomer, a mineral filler and a rubber-mineral filler bonding agent.

8. A process according to claim 8 wherein natural rubber, halobutyl elastomer, mineral filler and bonding agent are added separately to the blend.

9. A process according to claims 7 or 8 wherein the mineral filler is silica and the bonding agent is a silane that has at least one hydroxyl group or hydrolysable group attached to a silicon atom of the silane.

10. A process according to claim 9 wherein the silane is aminopropyltriethoxysilane, bis[3-(triethoxysilyl)propyl]- tetrasulfane, bis[3-(triethoxysilyl)propyl]-disulfane or mercaptopropyl trimethoxysilane, or a mixture of two or more of these.

11. A cured, filled elastomeric composition according to any one of claims 1 to 6 in the form of a tire tread for a vehicle.

12. A cured, filled elastomeric composition according to any one of claims 1 to 6 in the form of a tire tread for a truck.

13. A cured, filled elastomeric composition according to any one of claims 1 to 6 in the form of an engine mount, a shoe sole or a diaphragm for a pump
